# EUROPEAN PATENT SPECIFICATION

(11) **EP 4 457 550 B1**
(45) Date of publication and mention of the grant of the patent: **26.08.2026**
(21) Application number: 22840770.6
(22) Date of filing: 22.12.2022
(51) Int. Cl.: G02B 6/10, G02B 6/12, G02B 6/122, G02B 6/126, G02B 6/13, G02B 6/136, G02B 6/27, G02F 1/01, G02F 1/017

(54) **POLARISATION CONVERTER AND METHOD OF FABRICATION**
POLARISATIONSWANDLER UND VERFAHREN ZU SEINER HERSTELLUNG
CONVERTISSEUR DE POLARISATION ET PROCÉDÉ DE FABRICATION

(30) Priority: 31.12.2021 GB 202119139
(43) Date of publication of application: 06.11.2024
(73) Proprietor: SMART Photonics Holding B.V., 5656 AE Eindhoven (NL)
(72) Inventor: NILSEN, Madeleine, Eindhoven 5656 AE (NL); MILLÁN-MEJÍA, Alonso Jesús, Eindhoven 5656 AE (NL); AUGUSTIN, Ludovicus Marie, Eindhoven 5656 AE (NL)
(74) Representative: EIP
(86) International application number: PCT/EP2022/087621
(87) International publication number: WO 2023/126324

(56) References cited:
- JP-A- 2006 054 317
- JP-A- 2010 010 284
- JP-A- H1 078 519
- US-A1- 2008 069 493
- US-A1- 2014 321 797
- EL-REFAEI H ET AL: "Slanted-Rib Waveguide InGaAsP-InP Polarization Converters", JOURNAL OF LIGHTWAVE TECHNOLOGY, IEEE, USA, vol. 22, no. 5, 1 May 2004 (2004-05-01), pages 1352 - 1357, XP011112844, ISSN: 0733-8724, DOI: 10.1109/JLT.2004.825349
- HEIDRICH H: "PASSIVE MODE CONVERTER WITH A PERIODICALLY TILTED INP/GAINASP RIB WAVEGUIDE", IEEE PHOTONICS TECHNOLOGY LETTERS, IEEE, USA, vol. 4, no. 1, 1 January 1992 (1992-01-01), pages 34 - 36, XP000244563, ISSN: 1041-1135, DOI: 10.1109/68.124867

## Description

### Background

Semiconductor structures can be used in photonic integrated circuits (PICs) to perform various functions. A semiconductor structure for use in a PIC is manufactured according to its intended application within that PIC, for example to function as a particular component or building block of the PIC as a whole. For example, a PIC may comprise a waveguide for light to propagate from one part of the PIC to another in a desired manner. It is desirable to improve a polarisation converter for a PIC.

JPH1078519A relates to a semiconductor polarisation rotating element. JP2006054317A relates to a method for manufacturing a semiconductor element for ultrafast wavelength division multiplexing optical communication. US2008/069493A1 relates to an integrated optoelectronic device including waveguide-type optoelectronic elements, such as semiconductor lasers and electroabsorption modulators, and a method of fabricating the same. US2014/321797 A1 relates to polarisation converters used in photonic integrated circuits. JP2010010284A relates to a method for manufacturing an integrated optical semiconductor device in which a plurality of semiconductor elements are integrated. EL-REFAEI H ET AL: "Slanted-Rib Waveguide InGaAsP-InP Polarization Converters", JOURNAL OF LIGHTWAVE TECHNOLOGY, IEEE, USA, vol. 22, no. 5, 1 May 2004 (2004-05-01), pages 1352-1357, discloses another polarisation rotating element of the prior art.

### Brief Description of the Drawings

Figure 1 illustrates schematically a first side cross-section of a polarisation converter according to examples;
Figure 2A illustrates a first polarisation of light;
Figure 2B illustrates a second polarisation of light;
Figure 3 illustrates schematically a second side cross-section of the polarisation converter;
Figure 4 illustrates the equator plane of the Poincare sphere according to examples;
Figures 5a to 5j illustrate schematically a method of fabricating a polarisation converter according to examples; and
Figure 6 is a flow diagram broadly describing examples of a fabrication method.

### Detailed Description

Examples described herein relate to a semiconductor structure for a PIC. More specifically, the examples described herein relate to a polarisation converter for a PIC.

In some examples, a PIC is constructed from basic building blocks intended for the construction of the PIC. The basic building blocks include various components, each having a particular function. An example of a basic building block is a waveguide structure. Basic building blocks may have a particular effect on light incident thereon. The examples described herein relate to a polarisation converter that can be used as a basic building block for a PIC. The invention is defined in independent claims 1 and 10.

A polarisation converter is a component for an optical system (such as a PIC) which converts between different polarisations of light. For example, a suitably configured light polarisation converter can be used to convert between a first linear polarisation of light and a second linear polarisation of light (e.g. convert horizontally polarised light into vertically polarised light and vice versa). In another example, a suitably configured light polarisation converter can be used to convert between linearly polarised light and circular or elliptical polarised light. A light polarisation converter may also be referred to as a light polarisation rotator or a birefringent rotator.

Light polarisation converters can be manufactured as a basic building block for a PIC by, for example, wet etching a waveguide to have angled side walls. However, forming one or more boundaries of a waveguide to obtain a sloped surface as desired using a wet etching technique may be difficult. This is because etching to create a surface may result in small irregularities in that surface. The irregularities can have an impact on light propagation in the waveguide. Furthermore, the control over the manufacturing process with etching techniques for the waveguide may not be enough to obtain desired manufacturing tolerances for the light polarisation converter.

As examples to be described illustrate, a polarisation converter with a second semiconductor layer with a first portion thicker than a second portion, and a corresponding method of manufacture, provide a polarisation converter component for a PIC and a simple manufacture method for obtaining a sloped surface of the polarisation converter of desired orientation and within acceptable tolerances.

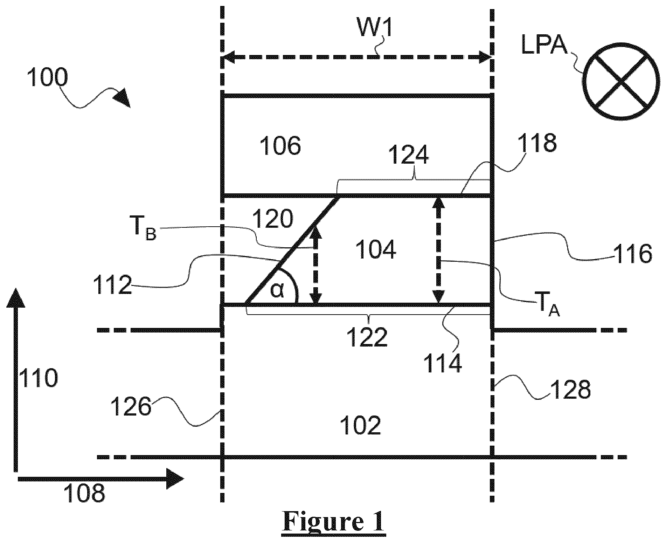

Figure 1 illustrates schematically a side cross-section of a polarisation converter 100 according to examples; the side cross-section is viewed in a cross-sectional plane perpendicular a light propagation axis LPA. The polarisation converter 100 is for a PIC. The polarisation converter 100 comprises a substrate which is for example referred to herein as a first semiconductor layer 102 (though in other examples it is envisaged that the substrate is a separate layer on which the so-called first semiconductor layer is provided or formed, possibly with one or more intermediate layers between the substrate and the first semiconductor layer).

The light polarisation converter 100 comprises a second semiconductor layer 104 on and in contact with the first semiconductor layer 102. A third semiconductor layer 106 is on and in contact with the second semiconductor layer 104. The second semiconductor layer 104 is between the first and third semiconductor layers.

In the examples of Figure 1, a cross section is shown such that the light propagation axis is into the page, as indicated by symbol LPA. The first axis 108 is the horizontal axis with respect to the orientation shown in Figure 1, and the second axis 110 is the vertical axis with respect to the orientation shown in Figure 1. As referred to herein, widths of parts of the polarisation converter 100 are along the first axis 108. As referred to herein, lengths of various parts of the polarisation converter are along the light propagation axis indicated by the symbol LPA. As referred to herein, the terms height, upper and lower are with respect to the second axis 110.

Each of the first semiconductor layer and the third semiconductor layer comprises, e.g. is formed of, a so-called III-V semiconductor compound such as indium phosphide (InP), gallium arsenide (GaAs), gallium nitride (GaN) or gallium antimonide (GaSb). In other examples, the substrate comprises a nitride based material or a silicon based material.

The second semiconductor layer comprises, e.g. is formed of, a material which has a higher refractive index than the material of the first and third semiconductor layers. For example, the second semiconductor layer comprises indium gallium arsenide phosphide (InGaAsP). More generally, in some examples, the second semiconductor layer comprises (Al)InGaAs(P). The elements indicated in the parentheses can be interchangeable and the composition of the different elements is selected depending on the desired function. For example, the composition of Ga and As in InGaAs can be selected according to the desired bandgap. In some examples, the second semiconductor layer is a layer of (Al)InGaAs(P).

With the refractive index difference between the second, and the first and third, semiconductor layers the second semiconductor layer functions as a core layer of a waveguide structure. The bandgap and therefore, as will be appreciated by those skilled in the art, the refractive index of the InGaAsP, for example, can be tuned. In some examples, the bandgap of the InGaAsP of the second semiconductor layer is tuned to a wavelength of 1250 nanometres (e.g. for propagation of light of wavelength 1550 nanometres) or 1100 nanometres (e.g. for propagation of light of wavelength 1310 nanometres). In other examples, the wavelength to which the bandgap is tuned is different.

The second semiconductor layer, e.g. the waveguide core layer, is for guiding light. In use, light propagates within the second semiconductor layer and is confined within the second semiconductor layer, due to reflection at the boundaries of the second semiconductor layer. The second semiconductor layer 104 has a refractive index higher than the refractive index of material in contact with the second semiconductor layer at the boundaries at which confinement of light is desired. For example, due to this refractive index difference at the boundaries at which confinement of light is desired, total internal reflection takes place when the angle of incidence at these boundaries of the second semiconductor layer is greater than the critical angle. In this manner, the second semiconductor layer guides the propagation of the light. For a particular optical mode to propagate in the second semiconductor layer, it is desired that the light reflected at the boundaries of the second semiconductor layer fulfils the conditions for constructive interference, as will be appreciated by the skilled person.

For example, particular optical modes of light are desired to propagate through the second semiconductor layer depending on the desired application of the polarisation converter 100. The direction in which the optical modes propagate within the second semiconductor layer is herein referred to as the light propagation direction, along the light propagation axis LPA. The light propagation direction is the general direction in which the energy of the optical mode travels through the second semiconductor layer and is not necessarily, for example, the direction defined by the angle of incidence at a boundary of the second semiconductor layer.

The second semiconductor layer, when viewed in the cross-sectional plane of Figure 1, has a first portion thicker than a second portion of the second semiconductor layer. A first thickness T_{A} of the second semiconductor layer is therefore larger than a second thickness T_{B}. The first and second thickness T_{A}, T_{B} are each taken in a direction perpendicular the light propagation axis LPA, are parallel each other, and are taken between the second surface 114 and the fourth surface 118 (described later) of the second semiconductor layer. Hence when viewed in Figure 1 the thicknesses can be considered heights.

The second semiconductor layer can be considered to be tapered, with the different thicknesses, as viewed in Figure 1. In examples the taper is such that there is a decrease in thickness of the second semiconductor layer from one side of the polarisation converter to the opposite side of the polarisation converter. The taper is in examples a linear taper, such that the thickness decreases linearly from a larger thickness, such as the first thickness, to a smaller thickness such as the second thickness. The first thickness is e.g. a maximum thickness and the second thickness is e.g. a minimum thickness.

The second semiconductor layer has a first surface 112, a second surface 116, a third surface 114 and a fourth surface 118. Each of the first surface and the second surface is not in contact with the first semiconductor layer and the third semiconductor layer. The third surface is in contact with the first semiconductor layer and the fourth surface is in contact with the third semiconductor layer.

With the second semiconductor layer having first and second portions of different thicknesses, such that the second semiconductor layer can be considered to taper, an orientation of the first surface can be set in accordance with desired polarisation conversion properties. The first surface can be considered to tilt or slope, for example by an internal angle α taken relative to the third surface. Hence with the first surface being angled in this way, differently from the second surface, the first surface is for example non-parallel second surface. For example, the first surface is angled relative to the third surface by the internal angle α of 30 to 65 degrees, for example, and depending on a plane of a crystalline material, 30 to 40 degrees, such as approximately 35 degrees (within acceptable manufacturing tolerances), or 50 to 65 degrees, such as approximately 55 degrees or 60 degrees (within acceptable manufacturing tolerances), 50 to 55, 55 to 60 or 60 to 65 degrees and/or the second surface is angled relative to the third surface by an internal angle β of approximately 90 degrees within acceptable manufacturing tolerances. The third surface is for example substantially parallel the fourth surface (e.g. parallel within acceptable manufacturing tolerances).

The material of which the second semiconductor layer is formed is for example a crystalline material, with the angle of the first surface corresponding with a {111} plane of the crystalline material. The { 111 } notation is in accordance with the Miller index system for indicating a plane or family of planes in a crystal, as will be known to the skilled person. Such a plane may also be referred to as a crystal plane. As will be explained later, by using an appropriate manufacturing method, e.g. with a particular etchant selective for a particular crystal plane, the angle of the first surface can be simply obtained.

Such an etching approach is selective so as to etch the material of the second semiconductor layer without etching (or notably more slowly etching) the material of the first and third semiconductor layers. Hence, to form the angled first surface, second semiconductor layer material is removed during the etching from between the first and third semiconductor layers, e.g. from under the third semiconductor layer. There is therefore a region between the first and third semiconductor layers where the second semiconductor layer is not present. In other words the second semiconductor layer is absent from the region.

Related to this, and with the first surface angled as described above, the second semiconductor layer (e.g. the third surface) contacts a first surface area 122 of the first semiconductor layer and the second semiconductor layer (e.g. the fourth surface) contacts a second surface area 124 of the third semiconductor layer such that the first surface area is larger than the second surface area, or if the first surface is oriented differently the first surface area is smaller than the second surface area.

With the first surface of the second semiconductor layer angled in this way, the first surface is in examples at least partly recessed from a first plane 126 substantially coplanar (e.g. in the same plane within acceptable tolerances) with a first surface of the first semiconductor layer and a first surface of the third semiconductor layer. In contrast, the second surface of the second semiconductor is for example substantially coplanar with a second surface of the first semiconductor layer and a second surface of the third semiconductor layer in a second plane 128.

A distance by which the first surface of the second semiconductor layer is recessed from the first plane is perpendicular the thickness T_{A}, T_{B} and as explained below depends on a duration of removing second semiconductor layer material, e.g. using a so-called under-etching process.

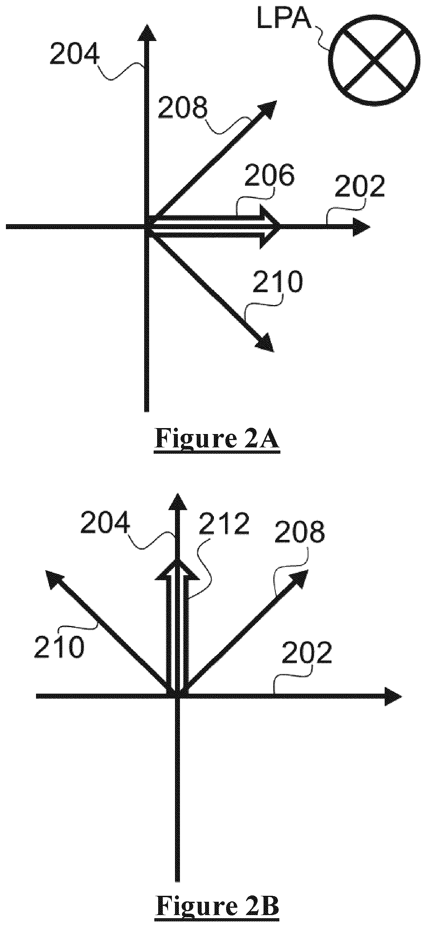

To help explain the functionality of the polarisation converter, Figure 2 illustrates a transverse electric (TE) polarisation axis 202 and a transverse magnetic (TM) polarisation axis 204. The symbol LPA is included in Figure 2 to indicate the light propagation direction, which is into the page (perpendicular to both the TE polarisation axis 202 and the TM polarisation axis 204). With respect to the cross section of Figure 1, the TE polarisation axis 202 is parallel to the first axis 108, and the TM polarisation axis 204 is parallel to the second axis 110.

For linearly polarised light, the direction of the electric field of light propagating as indicated by the symbol LPA can be indicated with respect to the TE polarisation axis 202 and the TM polarisation axis 204. The arrow 206 indicates linearly polarised light that is TE polarised.

The angled first surface of the second semiconductor layer causes there to be hybrid modes within the core layer of the waveguide. This arrangement provides a "tilted" or sloped boundary condition for the light propagating within the waveguide, providing for the hybrid modes. This is because, the light is propagating within a core layer with different thicknesses parallel to the vertical axis 110.

The tilted boundary condition causes there to be a first hybrid mode which has an electric field tilted with respect to the TE axis because of the geometry of the second semiconductor layer. The first hybrid mode occupies the second semiconductor layer given the orientation of the angled first surface. There is also a second hybrid mode orthogonal to the first hybrid mode. A hybrid mode, as referred to herein, is a mode of light which has an electric field with a non-zero component along the TE polarisation axis 202 and a non-zero component along the TM polarisation axis 204.

In the examples of Figure 2, there is shown a first hybrid mode 208 and a second hybrid mode 210. The first and second hybrid modes 208, 210 illustrate an example of hybrid modes that may exist within the second semiconductor layer when light is propagating therethrough. In this example, the first and second hybrid modes 208, 210 arise from light with TE polarisation (with the electric field along the TE polarisation axis 202), as shown by arrow 206, incident on the light polarisation converter 100 for propagation through the second semiconductor layer.

In the examples of Figure 2, the tilt angle (relative to the TE axis 202) for the first hybrid mode 208 is assumed to be 45 degrees. Such a tilt angle for the first hybrid mode 208 arises as a result of the orientation of the angled first surface of the second semiconductor layer, for example. In these examples, the angle with respect to the TE axis 202 of the second hybrid mode 210 is also 45 degrees and the first and second modes 208, 210 have electric fields with equal magnitude. Those skilled in the art will appreciate that the first and second modes 208, 210, with the tilt angle of 45 degrees and the phase relationship shown in Figure 2A, have equal and opposite components along the TM polarisation axis 204 and in combination correspond to TE polarised light.

Furthermore, the described arrangement of the second semiconductor layer causes a different propagation constant for the first and second hybrid modes 208, 210. The arrangement results in birefringence such that the first and second hybrid modes 208, 210 experience different effective refractive indices to one another when propagating within the second semiconductor layer. This means that the phase difference between the first and second hybrid modes 208, 210 changes as the first and second hybrid modes 208, 210 propagate. In other words, the phases of the first and second modes 208, 210 evolve differently as the first and second modes 208, 210 propagate within the second semiconductor layer. The presence of the hybrid modes and their different propagation constants provide that the arrangement of the second semiconductor layer can be used to convert the polarisation of light input into the light polarisation converter 100. The way in which polarisation is converted is described in further detail below.

In some examples, the polarisation converter 100 is for converting between a first linear polarisation of a given wavelength of light and a second linear polarisation of the given wavelength of light. In some such examples, a length of the waveguide 104 in the light propagation axis is substantially equal (within acceptable tolerances) to an odd integer multiplied by half of a beat length for the given wavelength of light.

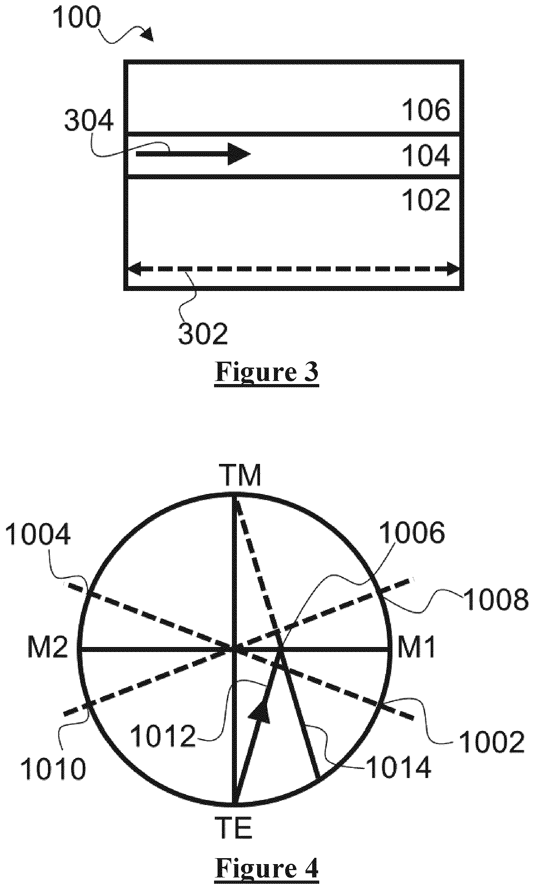

Figure 3 illustrates schematically a side cross-section of the polarisation converter 100 according to examples. The examples of Figure 3 correspond to the examples of Figure 1. It should be noted that Figure 3 is a schematic illustration and should not be taken to indicate precise proportions with respect to Figure 1, which is also schematic. In these examples, the second semiconductor layer has a length 302 as shown in Figure 3. The light propagation direction is indicated by arrow 304.

A length of the second semiconductor layer 104 for the phase of the modes of light propagating therein to be restored is referred to as the beat length. For example, if the first and second modes 208, 210 start their propagation within the second semiconductor layer in phase, the modes will be back in phase after propagating an integer multiple of the beat length within the second semiconductor layer. By selecting the waveguide length in the light polarisation converter 100 based on the beat length, the relative phase of the modes of light propagating therein can be controlled for light output from the polarisation converter 100.

As discussed above, the described arrangement of the second semiconductor layer causes a different propagation constant for the first and second hybrid modes 208, 210. The described arrangement of the second semiconductor layer causes there to be birefringence in that the first and second hybrid modes 208, 210 experience a different effective refractive index to one another. The propagation constant of the first hybrid mode 208 in the second semiconductor layer can be represented by β₂₀₈ and the propagation constant of the second hybrid mode 210 can be represented by β₂₁₀. The difference in these propagation constants can be represented as Δβ = β₂₀₈ - β₂₁₀. Equation 1 below shows the beat length L_{λ} for the second semiconductor layer for the first and second hybrid modes 208, 210. Those skilled in the art will appreciate that β represents phase propagation. In Equation (1) below, λ is the given wavelength and Δn represents the difference in the effective refractive indices of the first and second hybrid modes 208, 210: Δn = n₂₀₈ - n₂₁₀. ${L}_{λ} = \frac{2 π}{Δβ} = \frac{λ}{Δn}$

In some examples, the polarisation converter 100 is for rotating the linear polarisation of the given wavelength of light. As described above, in some such examples, the waveguide length 302 is substantially (within acceptable tolerances) equal to an odd integer multiplied by half of the beat length. This is the case in examples in which the tilt angle of the first mode 208 is 45 degrees relative to the TE axis 202. Factors determining the tilt are described further below. In other words, the waveguide length can be 1/2 of the beat length, 3/2 of the beat length, 5/2 of the length and so on, as indicated by Equation 2 below. In Equation 2, m represents an odd integer such as 1, 3, 5, 7, 9, etc. $Waveguide Length 302 = m \frac{π}{Δβ}$

This means that the relative phase of the first and second modes 208, 210 after propagating through the second semiconductor layer is shifted by π radians. Those skilled in the art will appreciate that when TE polarised light as indicated by the arrow 206 is incident on the second semiconductor layer, and the first and second modes 208, 210 arise at the beginning of the waveguide 104, the first and second modes 208, 210 will be in phase with one another. In other words, after propagating through the second semiconductor layer with a waveguide length of 1/2 the beat length (or 3/2 the beat length, or 5/2 of the beat length, etc.) the first and second modes 208, 210 are out of phase with each other by 180 degrees.

Figure 2B illustrates the TE and TM polarisation axes 202, 204 shown in Figure 2A. Figure 2B relates to the examples where linear TE polarised light is incident on the second semiconductor layer as indicated by Figure 2A, and the tilt angle of the first hybrid mode 208 relative to the TE axis 202 is 45 degrees. Figure 2B illustrates the first and second modes 208, 210 after having propagated through the second semiconductor layer in the direction indicated by the symbol LPA for an integer multiple of half the beat length. Those skilled in the art will appreciate that the electric field for light oscillates between opposing quadrants of the space indicated by the TE and TM polarisation axes 202, 204. Accordingly, in comparison to the state shown in Figure 2A, in Figure 2B, the first mode 208 has completed an integer multiple of its electric field oscillations, whereas the second mode 210 has completed an odd integer multiple of half of its electric field oscillation (to end up in the top left quadrant).

Those skilled in the art will appreciate that the first and second modes 208, 210 with the phase relationship shown in Figure 2B have equal and opposite components along the TE polarisation axis 202. The first and second modes 208, 210 with the phase relationship shown in Figure 2B would provide TM polarised light as indicated by the arrow 212, if the first and second modes 208, 210 exit the second semiconductor layer with the phase relationship shown in Figure 2B. In other words, if the phases of the first and second modes 208, 210 no longer evolve differently from the point shown in Figure 2B, the result is TM polarised light. It should be noted in the examples of Figure 2B, the first and second modes 208, 210 have a 45 degree angle relative to the TM axis 204.

In these examples, where the first hybrid mode 208 has a 45 degree angle relative to the TE axis 202, by selecting the waveguide length to be an odd integer multiplied by half of the beat length, linear polarisation of the given wavelength of light can be rotated as described above. For example, a first linear polarisation (TE polarisation in the above examples) can be converted to a second linear polarisation (TM polarisation in the above examples).

The above examples are in the context of the first hybrid mode 208 having a 45 degree tilt relative to the TE axis 202. In some examples, the arrangement of the first semiconductor layer 102 and the second semiconductor layer is such that when hybrid modes arise within the second semiconductor layer, the first hybrid mode 208 does not have a 45 degree angle relative to the TE axis 202. Factors influencing the tilt of the first hybrid mode are discussed further below. In such examples, a 90 degree rotation of polarisation (e.g. from TE polarisation to TM polarisation) does not take place upon propagating through a length 302 equal to an odd integer multiplied by half of the beat length.

In some examples, a polarisation converter (e.g. the polarisation converter 100) is provided in which the length 302 of the waveguide 104 is equal to an odd integer multiplied by a quarter of the beat length. A pair of such polarisation converters can be used where the tilt is not 45 degrees, in order to obtain a 90 degree linear polarisation rotation, as described in the following. A first polarisation converter of the pair has a length 302 of the waveguide 104 which achieves 90 degree (π/2 radians) phase difference between the first and second hybrid modes. This means that the length 302 can be 1/4 of the beat length, 5/4 of the beat length, 9/4 of the beat length and so on. A second polarisation converter of the pair has a length 302 of the waveguide 104 which achieves a 270 degree (3/2 π radians) phase difference between the first and the second hybrid modes. This means that the length 302 of the waveguide in the second polarisation converter can be 3/4 of the beat length, 7/4 of the beat length, 11/4 of the beat length and so on.

Figure 4 is a sketch of the equator plane of the Poincare sphere. Those skilled in the art will appreciate that all polarisation states can be mapped onto the surface of the so-called Poincare sphere. Points lying on the equator of the Poincare sphere represent all angles of linear polarisation. The poles of the Poincare sphere represent clockwise and anticlockwise circular polarisations. The points corresponding to TE polarisation and TM polarisation can be seen in Figure 4.

Points corresponding to the first and second hybrid modes 208, 210 lie on the equator of the Poincare sphere. The position of the hybrid modes on the equator depends on the tilt, in other words the angle, of the first hybrid mode relative to the TE axis 202.

In the case of the first hybrid mode having a 45 degree angle relative to the TE axis 202, the first hybrid mode corresponds to point M1 and the second hybrid mode corresponds to the point M2. An axis crossing M1 and M2 is perpendicular to an axis crossing the TE and TM polarisation points on the equator of the Poincare sphere. Propagation of the hybrid modes through the second semiconductor layer, where their phases evolve differently from one another, corresponds to rotation of a point that represents the polarisation when the hybrid modes recombine, about the axis crossing M1 and M2. A 180 degree rotation about an axis crossing M1 and M2 leads to e.g. polarisation conversion from TE polarisation to TM polarisation.

In the case of the first hybrid mode having an acute angle different to 45 degrees relative to the TE axis 202, points corresponding to the first and second hybrid modes are not points M1 and M2. In some examples, the first hybrid mode 208 corresponds to point 1002 and the second hybrid mode 210 corresponds to point 1004. In these examples, a 180 degree rotation about an axis crossing points 1002 and 1004 does not arrive at the TM polarisation point. As described above, when the tilt angle is different to 45 degrees, a 180 degree phase difference between the first and second hybrid modes does not provide a 90 degree rotation of linear polarisation.

However, a 90 degree rotation about the axis crossing points 1002 and 1004 arrives at point 1006. Point 1006 is a point on the surface of the Poincare sphere above the page of Figure 4. In some examples, the first light polarisation converter is used to obtain a polarisation corresponding to point 1006 on the Poincare sphere. In these examples, the first light polarisation converter provides hybrid modes that have polarisations corresponding to points 1002 and 1004. In other words, the first polarisation converter provides a tilt such that the hybrid modes have polarisations corresponding to points 1002 and 1004.

The second polarisation converter of the discussed examples provides a tilt in the opposite direction such that the hybrid modes in the second polarisation converter correspond to points 1008 and 1010. This can be achieved by the second polarisation converter having a side cross-section (corresponding to the side cross-section shown in Figure 1) which is the mirror image of the side cross-section (corresponding to the side cross-section shown in Figure 1) of the first polarisation converter.

An axis crossing points 1008 and 1010 is a mirror image of the axis crossing points 1002 and 1004, relative to the axis crossing points M1 and M2. Line 1012 represent a trajectory from the TE point to point 1006 after a 90 degree rotation about the axis crossing points 1002 and 1004. It should be noted that line 1012 is a straight line projection of the trajectory on the Poincare sphere which would follow the surface of the Poincare sphere.

A rotation about the axis crossing points 1008 and 1010 including the point 1006 traces a circle on the surface of the Poincare sphere which crosses the TM point. A rotation in the opposite direction from point 1006 and about the axis crossing points 1008 and 1010 can be used to arrive at the TM point. The second polarisation converter having a mirrored side-cross section provides rotation relative to the Poincare sphere in the opposite direction to the first polarisation converter. Line 1014 represents a straight line projection of a trajectory starting from point 1006, corresponding to rotation about the axis crossing points 1008 and 1010 in the opposite direction to the described 90 degree rotation to arrive at point 1006. The trajectory 1014 crosses the TM point after a 270 degree rotation about the axis crossing points 1008 and 1010.

In this manner, even in examples where the tilt of the first hybrid mode is not 45 degrees, a 90 degree rotation of the linear polarisation can be achieved by propagation of light through the first polarisation converter and then the second polarisation converter.

In some examples, the polarisation converter 100 is for converting between linear and circular polarisation of the given wavelength of light. In such examples, the waveguide length 302 is substantially (within acceptable tolerances) equal to an odd integer multiplied by a quarter of the beat length. In such examples, the tilt of the first hybrid mode is 45 degrees relative to the TE axis 202. The waveguide length 302 according to such examples is represented by Equation 3 below. $Waveguide Length 302 = m \frac{π}{2 Δβ}$

The first and second hybrid modes 208, 210 propagating in the waveguide 104 for an odd integer multiple of a quarter of the beat length would result in a phase different of 1/2 π radians (or 90 degrees). Those skilled in the art will appreciate that introducing a phase difference of 90 degrees about the axis crossing points M1 and M2 provides for conversion between linear and circular polarisations. Taking the example of linearly polarised light in the horizontal direction as indicated in Figure 2A incident on the waveguide 104, the polarisation converter 100 with a waveguide length 302 according to Equation 3 would convert the TE polarised light into circularly polarised light. In examples where circularly polarised light is incident on the polarisation converter for converting between linear and circular polarisations, the circularly polarised light would be converted into linearly polarised light.

It should be noted that the tilt or angled orientation of the first hybrid mode 208 will depend on the width of the second semiconductor layer. In examples, the difference in effective refractive index Δn of the first and second hybrid modes 208, 210 will also depend on the width of the second semiconductor layer. Accordingly, the width of the waveguide 104 can be selected to obtain the desired tilt angle and effective refractive index difference. As apparent from Equation (1), the effective refractive index difference relates to the beat length L_{λ} and will therefore impact the length 302 of the waveguide 104 depending on the desired application.

It is noted that in further examples, not according to the polarisation converter of claim 1, the polarisation converter is as described above but without the third semiconductor layer. So, during manufacture, the third semiconductor layer may be formed then removed to provide the polarisation converter. The above description and associated figures should appropriately be taken to apply here.

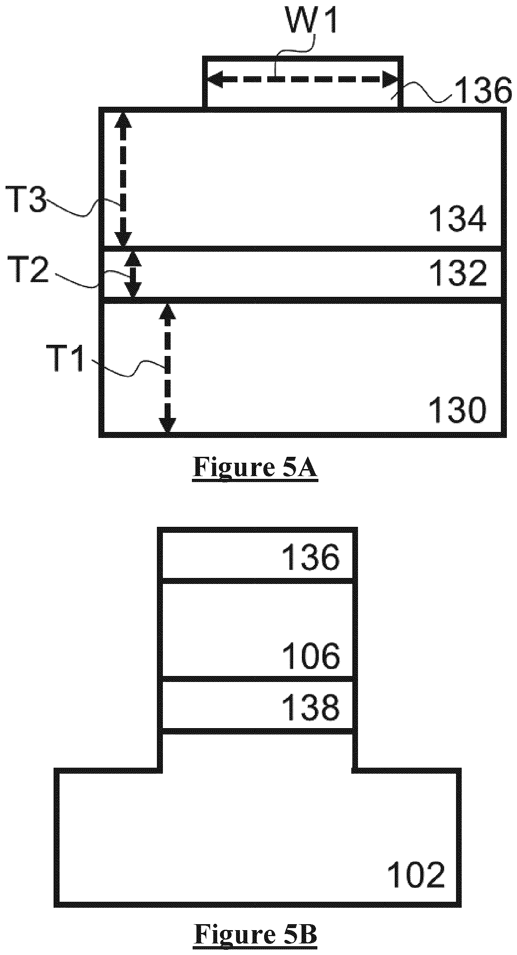

Figures 5A to 5J illustrate schematically a fabrication process in accordance with examples, of a polarisation converter described herein. It is to be noted that although the processing to form the polarisation converter is described, one or more of the processing steps described might also be applied elsewhere across the substrate, to form other components on the PIC. Where appropriate, the same reference numerals used previously when describing the polarisation converted are used here.

A first layer 130 of semiconductor material for forming the first semiconductor layer is formed or provided. As explained above this layer may be a substrate on which other components across the PIC are also formed, or may instead be a different semiconductor layer formed either directly on (in contact with) or indirectly on (supported by) the substrate. A second layer 132 of semiconductor material for forming the second semiconductor layer is then formed on and in contact with the first layer 130 of semiconductor material, followed by a third layer 134 of semiconductor material for forming the third semiconductor layer on and in contact with the second layer of semiconductor material. Each of these first, second and third layers can be considered a respective pre-cursor layer for the first, second and third semiconductor layers 102, 104, 106 of the polarisation converter until each such pre-cursor layer has been processed to form the first, second and third semiconductor layers 102, 104, 106.

As shown by Figure 5A, a mask layer 136 is then formed on the third layer, with an appropriate width W1 and length L1 (not illustrated, but perpendicular the width W1 and parallel the light propagation axis LPA of the fabricated polarisation converter) for the polarisation converter. The width and length are for example each parallel a plane of the surface of the first layer in contact with the semiconductor layer. The second layer 132 is formed with a thickness T2 for the second semiconductor layer and the third layer 134 is formed with a thickness T3 for the third semiconductor layer. Each of thicknesses T2 and T3 are taken perpendicular the width and length of the second and third layers respectively, each width and length parallel the width of the mask layer described above. The thickness T2 is for example 0.5 micrometres and the thickness T3 is for example 1.5 micrometres. The mask width W1 is for example 1.5 to 1.6, for example 1.57 micrometres, and in other examples is 1 to 2.5 micrometres. In such examples the mask width is substantially the same (within acceptable manufacturing tolerances) along the length L1 of the mask, but in other examples the mask width is different at different locations along the length L1.

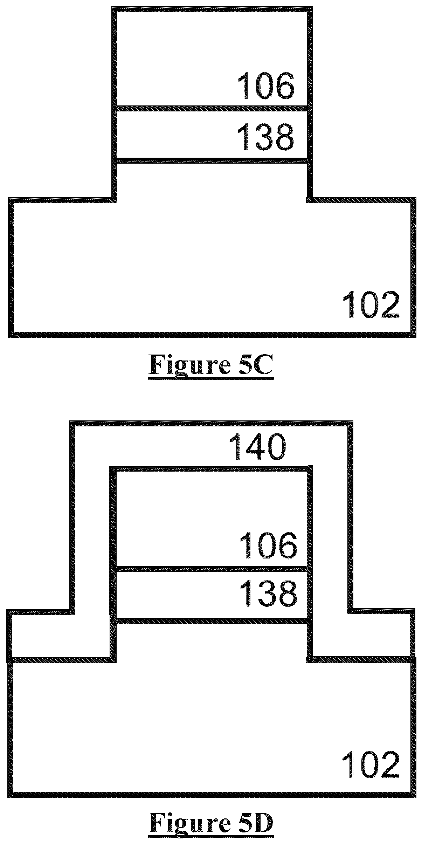

As shown by Figure 5C, using an appropriate etching technique, for example, parts of the first, second and third layers 130, 132, 134 not covered by the mask layer 136 are removed. This etching is for example a dry etching technique, though in other examples is a wet etching technique or a combination of both. Portions of the third layer are removed by the etching to form the third semiconductor layer 106 of the polarisation converter, a modified pre-cursor layer 138 for the second semiconductor layer of the polarisation converter, and the first semiconductor layer 102 of the polarisation converter. The etching removes portions of the second and third layers 132, 134 with the full thickness T2 and T3, but in some examples such as those illustrated, downwardly removes portions of less than a full thickness T1 of the first layer 130. Such etching forms the first surface of the first semiconductor layer, a first surface of the pre-cursor layer 138 in the first plane 126 described earlier, and the first surface of the third semiconductor layer. Such etching also forms the second surface of the first semiconductor layer, the second surface of the pre-cursor layer 138 which is the second surface of the semiconductor layer, and the second surface of the third semiconductor layer.

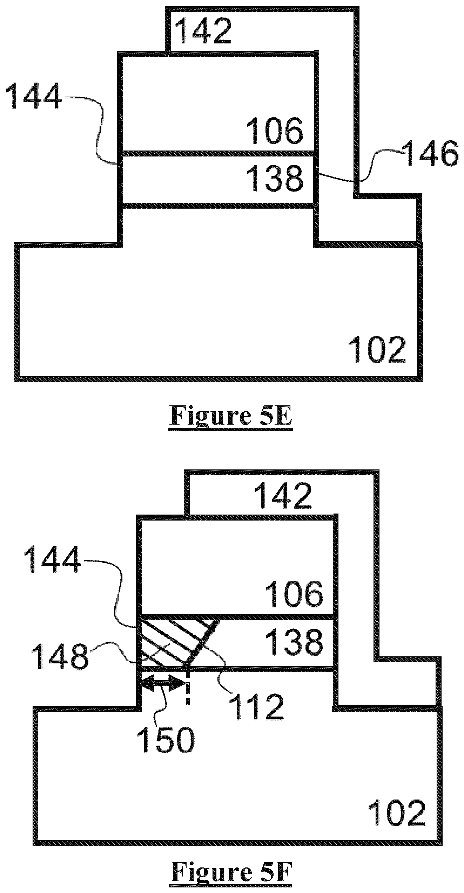

As Figure 5C shows, the mask layer 136 is then removed using an appropriate etching technique, for example. Then, as shown by Figure 5D, a protective layer 140 is then formed over all exposed surfaces, including side surfaces of the first and third semiconductor layers 102, 106 and also the pre-cursor layer 138. Such side surfaces include those surfaces parallel and perpendicular the light propagation axis LPA. The protective layer 140 is for example silicon nitride (with general formula SixNy where each of x and y is an integer, and e.g. with specific formula Si₃N₄) and is formed for example by plasma enhanced chemical vapour deposition (PECVD). In other examples the protective layer is silicon oxide (with general formula SixOy where each of x and y is an integer) or another dielectric material. Sputtering may be used instead of PECVD. In alternative examples, the protective layer shown in Figure 5E is of a resist material.

As Figure 5E shows, a first side 144 of the pre-cursor layer 138 for the second semiconductor layer is then exposed by removing a part of the protective layer covering the first side of the pre-cursor layer 138, but in these examples without also removing parts of the protective layer covering at least the three other exposed sides of the pre-cursor layer 138, including the surfaces of the pre-cursor layer 138 which will become the second surface 116 and two end surfaces (each in a plane perpendicular the light propagation axis LPA) of the second semiconductor layer. In removing part of the protective layer as described, parts of the first and third semiconductor layers are also exposed, but as the next Figure will illustrate, removing a portion of the pre-cursor layer 138 is selective for the material of the pre-cursor layer 138, without removing material of the first and third semiconductor layers. Such removing of part of the protective layer is done for example for silicon nitride by photolithography then a buffered oxide etch (BOE) process as the skilled person will understand. The protective layer with part removed can be considered a modified protective layer 142.

As shown by Figure 5F, a first portion of the pre-cursor layer 138 is removed from the first side of the pre-cursor layer 138, without removing a second portion of the pre-cursor layer from a second side 146 of the pre-cursor layer opposite the first side 144, during removing the first portion, and indeed without removing a portion of the pre-cursor layer from any side covered by the modified protective layer 142. The removed first portion 148 of the pre-cursor layer 138 is illustrated with diagonal shading in Figure 5F. In removing the first portion 148, the first surface 112 of the second semiconductor layer is formed, and in doing so in these examples the second semiconductor layer for the polarisation converter is formed.

Removing the first portion 148 of the pre-cursor layer 138 involves a wet etching technique, for example using an etchant selective for the material of the second semiconductor layer without etching the material of the first and third semiconductor layers. In this way, the first portion of the pre-cursor layer is etched without etching a portion of the third semiconductor layer overlapping the first portion of the pre-cursor layer. Such etching of the first portion of the pre-cursor layer can be considered an under-etching technique.

The etchant is not only selective for the material of the second semiconductor layer. With the material of the second semiconductor being a crystalline material, such as InGaAsP, the etchant is also for example selective for the {111} plane of the crystalline material, which corresponds with a desired angle for the first side of the second semiconductor layer. It is to be noted that, as the skilled person will appreciate, at least the pre-cursor layer is oriented during its formation so that its crystalline material lattice is oriented appropriately, so that the angled first surface of the second semiconductor layer is oriented as desired for the polarisation converter, once the first portion has been removed. For example, a line at the boundary of the first surface area and/or the second surface area is parallel the light propagation axis LPA.

The etching process is for example a kinetically limited process, meaning that a rate of etching the material is determined by the kinetics of the etching reaction between the etchant and the material being etched. This can be contrasted with a diffusion limited etching process where the rate of etching the material is determined by an availability of etchant at the etching site; if the etching reaction occurs too quickly for etchant used in the reaction to be replenished in time, then the rate of etching is limited in accordance with the rate at which etchant is replenished at the etching site by diffusion. As a result, by the kinetically limited process, the extent of the material of the pre-cursor layer 138 which is etched can be controlled by quenching or otherwise ceasing the etching reaction after a predetermined period of time.

The pre-cursor layer is etched from the first side until at least a surface of the pre-cursor layer is obtained with a desired planarity. Even though the etchant is selective for a particular plane of the crystalline material, e.g. the {111} plane, etching occurs at least for a minimum period of time to obtain a flat or planar enough first surface for the second semiconductor layer, so that the second semiconductor layer is satisfactorily formed for the polarisation converter to function correctly. Etching for less than or equal to a maximum period of time is also required, so that not too much of the pre-cursor layer is removed, which can otherwise compromise the functionality of the polarisation converter. Related to this, the width W1 of the mask layer is set appropriately, so the pre-cursor layer is sufficiently wide so as not to be too etched away which might otherwise compromise the performance of the resulting polarisation converter. The duration of etching determines an etching distance 150 along the surface of the first semiconductor layer, which determines the first surface area 122 and also, given the predetermined plane of the crystalline material, determines the second surface area 124.

In the examples described herein with the pre-cursor layer 138 of InGaAsP and the desired angle of the first surface of the second semiconductor layer corresponding to the {111} plane, an etchant of for example hydrogen peroxide (H₂O₂): sulfuric acid (H₂SO₄): water (H₂O) in a ratio of 1:1:10 by weight is used at a temperature of 20 degrees Celsius. It is to be appreciated that in other examples a different etchant may be used, possibly selective for a different plane of the crystalline material such as the {112} plane.

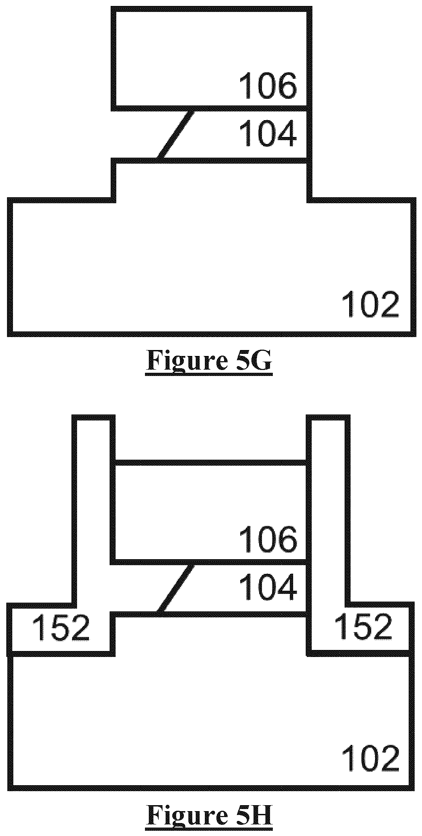

Once the first portion of the pre-cursor layer 138 has been removed, the second semiconductor layer is formed, and the protective layer 142 is removed using an appropriate wet etching technique to remove e.g. the silicon nitride, to leave the formed polarisation converter as shown in Figure 5G.

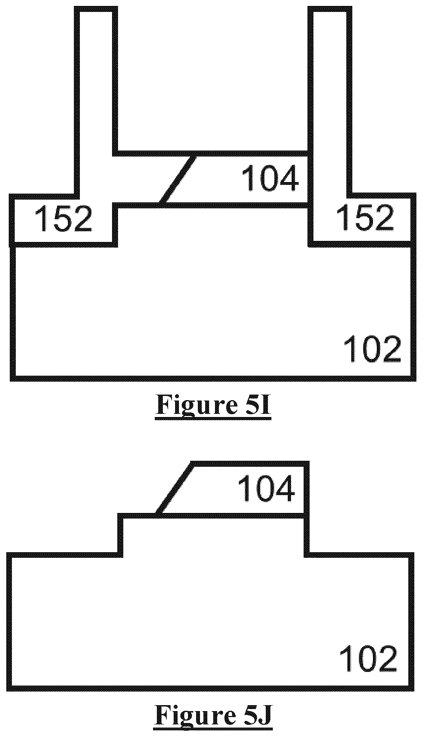

In some examples, the third semiconductor layer 106 is then removed to form an alternative polarisation converter which is similar to examples described earlier but without the third semiconductor layer. To remove the third semiconductor layer 106, for example, a protective layer 152 of e.g. silicon nitride is formed on the exposed surfaces of the first, second and third semiconductor layers except for an upper surface of the third semiconductor layer using an appropriate photolithography process as the skilled person will appreciate. See Figure 5H. Then, as shown in Figure 5I, using one or more appropriate etching techniques, the third semiconductor layer is removed, followed then by the protective layer 152 for removing the third semiconductor layer, to leave the polarisation converter of the first and second semiconductor layers. See Figure 5J.

The polarisation converter (and possibly other components on the PIC) may then be coated in a layer of silicon-based material and/or a polymer-based material, or one or more suitable coating material. The refractive index of such a material is selected such that, compared with the refractive index of one or more layers of the polarisation converter, a desired refractive index difference is obtained, e.g. with the coating material(s) have a lower refractive index than the layers of the polarisation converter. This refractive index difference in some examples influences the functionality of the polarisation converter, and so various dimensions of the layers of the polarisation converter may be selected in accordance with the refractive index difference, such as the width W1 and length of the polarisation converter. With the polarisation converter having the same functionality, a geometry of the polarisation converter may depend on the coating material that is used.

Whilst examples are described so far with the third semiconductor layer as a single layer, in further examples the third semiconductor layer comprises a stack of one or more pair of sub-layers, with one sub-layer of the pair being of the same material as the second semiconductor layer, and the other sub-layer of the pair being of the same material as the third semi-conductor layer. As a result of this stacked sub-layer structure, when removing the first portion to form the second semiconductor layer, e.g. by underetching, other sub-layers of the stack of the same material as the second semiconductor layer may also be underetched from the first side. Despite this, with the appropriate thickness of sub-layers in the stack of the same material as the second semiconductor layer, the sub-layers are more robust to being etched, and/or any recessing of such sub-layers on the first side, by the etchant for the first portion, does not noticeably affect the performance of the polarisation converter.

In the above description, reference is made to at least partly forming layers and the like. In some examples, a layer referred to in this manner is simply formed by depositing the relevant material, without requiring further steps. In other examples, further steps are performed to complete the formation of a layer (for example, a curing step, an etching step to define the extent of a layer, etc.). In some examples, the further steps to complete the formation of a layer are performed before further material is deposited on top of the layer in question. In other examples, the further steps to complete the formation of a layer are performed after further material is deposited on top of the layer in question.

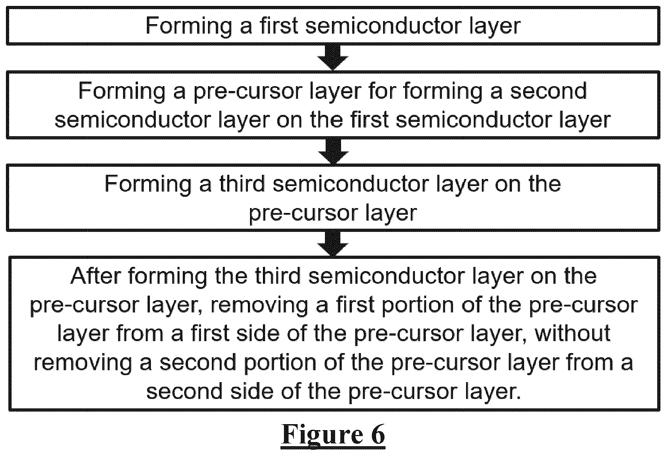

The fabrication method described using Figures 5A to 5J is not the only method envisaged for manufacturing the polarisation converter of examples. Further examples are envisaged which are also within the scope of the method broadly set out in the flow diagram of Figure 6. It is to be noted that the blocks of the flow diagram are not necessarily performed in the order in which they are presented.

The above examples are to be understood as illustrative examples of the invention. For example, a PIC is envisaged which comprises the polarisation converter of any example described herein. It is to be understood that any feature described in relation to any one example may be used alone, or in combination with other features described, and may also be used in combination with one or more features of any other of the examples, or any combination of any other of the examples. Furthermore, modifications not described above may also be employed without departing from the scope of the accompanying claims.

## Claims

1. A polarisation converter (100) for a photonic integrated circuit, comprising:
a first semiconductor layer (102);
a second semiconductor layer (104) configured to guide light along a light propagation axis (LPA) and comprising, when viewed in a cross-sectional plane perpendicular the light propagation axis, a first portion (*T_{A}*) thicker than a second portion (*T_{B}*) of the second semiconductor layer;
a third semiconductor layer (106), the second semiconductor layer between, and in contact with, the first semiconductor layer and the third semiconductor layer;
**characterized in that** there is a region between the first semiconductor layer and the third semiconductor layer, the second semiconductor layer being absent from the region.

2. The polarisation converter of claim 1, wherein the second semiconductor layer contacts a first surface area (122) of the first semiconductor layer and a second surface area (124) of the third semiconductor layer, the first surface area larger than the second surface area, or the second surface area larger than the first surface area.

3. The polarisation converter of any preceding claim, the second semiconductor layer comprising:
a first surface (112) not in contact with the first semiconductor layer and the third semiconductor layer;
a second surface (116) not in contact with the first semiconductor layer and the third semiconductor layer, the second surface non-parallel the first surface; and
a third surface (114) in contact with the first semiconductor layer.

4. The polarisation converter of claim 3, wherein:
(i) the first surface is angled relative to the third surface by an internal angle of 30 to 65 degrees, 30 to 40 degrees, 50 to 65 degrees, 50 to 55 degrees, 55 to 60 degrees or 60 to 65 degrees; and/or
(ii) the second surface is angled relative to the third surface by an internal angle of approximately 90 degrees; and/or
(iii) the second semiconductor layer comprises a fourth surface (118) in contact with the third semiconductor layer, the fourth surface substantially parallel the third surface; and/or
(iv) the second semiconductor layer comprises a crystalline material and the first surface of the second semiconductor layer is angled in correspondence with a plane of the crystalline material, for example the {111} plane of the crystalline material.

5. The polarisation converter of claim 3 or 4 , wherein a first surface of the first semiconductor layer and a first side of the third semiconductor layer are substantially coplanar in a first plane (126), the first surface of the second semiconductor layer at least partly recessed from the first plane.

6. The polarisation converter of claim 3, 4, or 5, wherein a second surface of the first semiconductor layer, the second surface of the second semiconductor layer, and a second surface of the third semiconductor layer are substantially coplanar in a second plane (128).

7. The polarisation converter of any preceding claim, wherein the first semiconductor layer is a layer of indium phosphide, the second semiconductor layer is a layer of indium gallium arsenide phosphide, and the third semiconductor layer is a layer of indium phosphide.

8. The polarisation converter of any preceding claim, wherein the second semiconductor layer is a core layer of a waveguide, the core layer having a different refractive index from each of the first semiconductor layer and the third semiconductor layer.

9. A photonic integrated circuit comprising the polarisation converter of any preceding claim.

10. A method of fabricating a polarisation converter (100) for a photonic integrated circuit, comprising:
forming a first semiconductor layer (130, 102);
forming a pre-cursor layer (132) for forming a second semiconductor layer (104) on the first semiconductor layer;
forming a third semiconductor layer (134, 106) on the pre-cursor layer; and
after forming the third semiconductor layer on the pre-cursor layer, and to form the second semiconductor layer between and in contact with the first semiconductor layer and the third semiconductor layer, removing a first portion of the pre-cursor layer from a first side of the pre-cursor layer, without removing a second portion of the pre-cursor layer from a second side of the pre-cursor layer, to form a first surface of the second semiconductor layer such that, when viewed in a cross-sectional plane perpendicular a light propagation axis of the polarisation converter, a first portion of the second semiconductor layer is thicker than a second portion of the second semiconductor layer, **characterized in that** removing the first portion of the pre-cursor layer comprises etching the first portion of the pre-cursor layer without etching a portion of the third semiconductor layer overlapping the first portion.

11. The method of claim 10, the pre-cursor layer comprising a crystalline material, wherein removing the first portion of the pre-cursor layer comprises etching the pre-cursor layer from the first side using an etchant selective for a {111} plane of the crystalline material, the {111} plane corresponding to a desired angle for the first side of the second semiconductor layer.

12. The method of claim 10 or 11, comprising etching the pre-cursor layer from the first side until the first surface of the second semiconductor layer is obtained with a desired planarity.

13. The method of any of claims 10 to 12, comprising:
forming a protective layer over the second portion of the pre-cursor layer, to protect against removing the second portion of the pre-cursor layer during removing the first portion of the pre-cursor layer; and
removing the protective layer after removing the first portion of the pre-cursor layer.

14. The method of any of claims 10 to 13, comprising removing the third semiconductor layer after forming the second semiconductor layer.

15. The method of any of claims 10 to 14, comprising:
etching to form a first surface of the first semiconductor layer, a first surface of the pre-cursor layer, and a first surface of the third semiconductor layer substantially coplanar with each other; and
etching to form a second surface of the first semiconductor layer, a second surface of the pre-cursor layer, and a second surface of the third semiconductor layer substantially coplanar with each other, wherein the second surface of the pre-cursor layer is the second surface of the second semiconductor layer.

## Patentansprüche

1. Polarisationswandler (100) für eine photonische integrierte Schaltung, umfassend:
eine erste Halbleiterschicht (102);
eine zweite Halbleiterschicht (104), die konfiguriert ist, um Licht entlang einer Lichtausbreitungsachse (LPA) zu leiten, und umfassend, bei Betrachtung in einer Querschnittsebene senkrecht zu der Lichtausbreitungsachse, einen ersten Abschnitt (*T_{A}*), der dicker als ein zweiter Abschnitt (*T_{B}*) der zweiten Halbleiterschicht ist;
eine dritte Halbleiterschicht (106), wobei die zweite Halbleiterschicht zwischen der ersten Halbleiterschicht und der dritten Halbleiterschicht ist und mit diesen in Berührung steht;
**dadurch gekennzeichnet, dass** eine Region zwischen der ersten Halbleiterschicht und der dritten Halbleiterschicht vorhanden ist, wobei die zweite Halbleiterschicht aus der Region fehlt.

2. Polarisationswandler nach Anspruch 1, wobei die zweite Halbleiterschicht einen ersten Oberflächenbereich (122) der ersten Halbleiterschicht und einen zweiten Oberflächenbereich (124) der dritten Halbleiterschicht berührt, wobei der erste Oberflächenbereich größer als der zweite Oberflächenbereich oder der zweite Oberflächenbereich größer als der erste Oberflächenbereich ist.

3. Polarisationswandler nach einem der vorstehenden Ansprüche, die zweite Halbleiterschicht umfassend:
eine erste Oberfläche (112), die nicht mit der ersten Halbleiterschicht und der dritten Halbleiterschicht in Berührung steht;
eine zweite Oberfläche (116), die nicht mit der ersten Halbleiterschicht und der dritten Halbleiterschicht in Berührung steht, wobei die zweite Oberfläche nicht parallel zu der ersten Oberfläche ist; und
eine dritte Oberfläche (114), die mit der ersten Halbleiterschicht in Berührung steht.

4. Polarisationswandler nach Anspruch 3, wobei:
(i) die erste Oberfläche relativ zu der dritten Oberfläche um einen Innenwinkel von 30 bis 65 Grad, 30 bis 40 Grad, 50 bis 65 Grad, 50 bis 55 Grad, 55 bis 60 Grad oder 60 bis 65 Grad abgewinkelt ist; und/oder
(ii) die zweite Oberfläche relativ zu der dritten Oberfläche um einen Innenwinkel von etwa 90 Grad abgewinkelt ist; und/oder
(iii) die zweite Halbleiterschicht eine vierte Oberfläche (118) in Berührung mit der dritten Halbleiterschicht umfasst, wobei die vierte Oberfläche im Wesentlichen parallel zu der dritten Oberfläche ist; und/oder
(iv) die zweite Halbleiterschicht ein kristallines Material umfasst und die erste Oberfläche der zweiten Halbleiterschicht entsprechend einer Ebene des kristallinen Materials, zum Beispiel der {111}-Ebene des kristallinen Materials, abgewinkelt ist.

5. Polarisationswandler nach Anspruch 3 oder 4, wobei eine erste Oberfläche der ersten Halbleiterschicht und eine erste Seite der dritten Halbleiterschicht in einer ersten Ebene (126) im Wesentlichen koplanar sind, wobei die erste Oberfläche der zweiten Halbleiterschicht mindestens teilweise von der ersten Ebene zurückgesetzt ist.

6. Polarisationswandler nach Anspruch 3, 4 oder 5, wobei eine zweite Oberfläche der ersten Halbleiterschicht, die zweite Oberfläche der zweiten Halbleiterschicht und eine zweite Oberfläche der dritten Halbleiterschicht in einer zweiten Ebene (128) im Wesentlichen koplanar sind.

7. Polarisationswandler nach einem der vorstehenden Ansprüche, wobei die erste Halbleiterschicht eine Schicht aus Indiumphosphid ist, die zweite Halbleiterschicht eine Schicht aus Indiumgalliumarsenidphosphid ist und die dritte Halbleiterschicht eine Schicht aus Indiumphosphid ist.

8. Polarisationswandler nach einem der vorstehenden Ansprüche, wobei die zweite Halbleiterschicht eine Kernschicht eines Wellenleiters ist, wobei die Kernschicht einen unterschiedlichen Brechungsindex als jede der ersten Halbleiterschicht und der dritten Halbleiterschicht aufweist.

9. Photonische integrierte Schaltung, umfassend den Polarisationswandler nach einem der vorstehenden Ansprüche.

10. Verfahren zum Herstellen eines Polarisationswandlers (100) für eine photonische integrierte Schaltung, umfassend:
Ausbilden einer ersten Halbleiterschicht (130, 102);
Ausbilden einer Vorläuferschicht (132) zum Ausbilden einer zweiten Halbleiterschicht (104) auf der ersten Halbleiterschicht;
Ausbilden einer dritten Halbleiterschicht (134, 106) auf der Vorläuferschicht; und
nach dem Ausbilden der dritten Halbleiterschicht auf der Vorläuferschicht und um die zweite Halbleiterschicht zwischen und in Berührung mit der ersten Halbleiterschicht und der dritten Halbleiterschicht auszubilden, Entfernen eines ersten Abschnitts der Vorläuferschicht von einer ersten Seite der Vorläuferschicht, ohne einen zweiten Abschnitt der Vorläuferschicht von einer zweiten Seite der Vorläuferschicht zu entfernen, um eine erste Oberfläche der zweiten Halbleiterschicht derart auszubilden, dass, bei Betrachtung in einer Querschnittsebene senkrecht zu einer Lichtausbreitungsachse des Polarisationswandlers, ein erster Abschnitt der zweiten Halbleiterschicht dicker als ein zweiter Abschnitt der zweiten Halbleiterschicht ist,
**dadurch gekennzeichnet, dass** das Entfernen des ersten Abschnitts der Vorläuferschicht ein Ätzen des ersten Abschnitts der Vorläuferschicht umfasst, ohne einen Abschnitt der dritten Halbleiterschicht zu ätzen, der den ersten Abschnitt überlappt.

11. Verfahren nach Anspruch 10, die Vorläuferschicht umfassend ein kristallines Material, wobei das Entfernen des ersten Abschnitts der Vorläuferschicht das Ätzen der Vorläuferschicht von der ersten Seite unter Verwendung eines Ätzmittels umfasst, das für eine {111}-Ebene des kristallinen Materials selektiv ist, wobei die {111}-Ebene einem gewünschten Winkel für die erste Seite der zweiten Halbleiterschicht entspricht.

12. Verfahren nach Anspruch 10 oder 11, umfassend das Ätzen der Vorläuferschicht von der ersten Seite, bis die erste Oberfläche der zweiten Halbleiterschicht mit einer gewünschten Ebenheit erhalten wird.

13. Verfahren nach einem der Ansprüche 10 bis 12, umfassend:
Ausbilden einer Schutzschicht über dem zweiten Abschnitt der Vorläuferschicht, um vor dem Entfernen des zweiten Abschnitts der Vorläuferschicht während des Entfernens des ersten Abschnitts der Vorläuferschicht zu schützen; und
Entfernen der Schutzschicht nach dem Entfernen des ersten Abschnitts der Vorläuferschicht.

14. Verfahren nach einem der Ansprüche 10 bis 13, umfassend das Entfernen der dritten Halbleiterschicht nach dem Ausbilden der zweiten Halbleiterschicht.

15. Verfahren nach einem der Ansprüche 10 bis 14, umfassend:
Ätzen, um eine erste Oberfläche der ersten Halbleiterschicht, eine erste Oberfläche der Vorläuferschicht und eine erste Oberfläche der dritten Halbleiterschicht im Wesentlichen koplanar zueinander auszubilden; und
Ätzen, um eine zweite Oberfläche der ersten Halbleiterschicht, eine zweite Oberfläche der Vorläuferschicht und eine zweite Oberfläche der dritten Halbleiterschicht im Wesentlichen koplanar zueinander auszubilden, wobei die zweite Oberfläche der Vorläuferschicht die zweite Oberfläche der zweiten Halbleiterschicht ist.

## Revendications

1. Convertisseur de polarisation (100) pour un circuit intégré photonique, comprenant :
une première couche semi-conductrice (102) ;
une deuxième couche semi-conductrice (104) configurée pour guider la lumière le long d'un axe de propagation de la lumière (LPA) et comprenant, lorsqu'elle est vue dans un plan transversal perpendiculaire à l'axe de propagation de la lumière, une première partie (*T_{A}*) plus épaisse qu'une seconde partie (*T_{B}*) de la deuxième couche semi-conductrice ;
une troisième couche semi-conductrice (106), la deuxième couche semi-conductrice se trouvant entre la première couche semi-conductrice et la troisième couche semi-conductrice et étant en contact avec celles-ci ;
**caractérisé en ce qu'il** existe une région entre la première couche semi-conductrice et la troisième couche semi-conductrice, la deuxième couche semi-conductrice étant absente de la région.

2. Convertisseur de polarisation selon la revendication 1, dans lequel la deuxième couche semi-conductrice entre en contact avec une première surface (122) de la première couche semi-conductrice et une deuxième surface (124) de la troisième couche semi-conductrice, la première surface étant plus grande que la deuxième surface ou la deuxième surface étant plus grande que la première surface.

3. Convertisseur de polarisation selon l'une quelconque revendication précédente, la deuxième couche semi-conductrice comprenant :
une première surface (112) non en contact avec la première couche semi-conductrice et la troisième couche semi-conductrice ;
une deuxième surface (116) non en contact avec la première couche semi-conductrice et la troisième couche semi-conductrice, la deuxième surface n'étant pas parallèle à la première surface ; et
une troisième surface (114) en contact avec la première couche semi-conductrice.

4. Convertisseur de polarisation selon la revendication 3, dans lequel :
(i) la première surface est inclinée par rapport à la troisième surface par un angle interne de 30 à 65 degrés, de 30 à 40 degrés, de 50 à 65 degrés, de 50 à 55 degrés, de 55 à 60 degrés ou de 60 à 65 degrés ; et/ou
(ii) la deuxième surface est inclinée par rapport à la troisième surface d'un angle interne d'environ 90 degrés ; et/ou
(iii) la deuxième couche semi-conductrice comprend une quatrième surface (118) en contact avec la troisième couche semi-conductrice, la quatrième surface étant sensiblement parallèle à la troisième surface ; et/ou
(iv) la deuxième couche semi-conductrice comprend un matériau cristallin et la première surface de la deuxième couche semi-conductrice est inclinée en correspondance avec un plan du matériau cristallin, par exemple, le plan {111} du matériau cristallin.

5. Convertisseur de polarisation selon la revendication 3 ou 4, dans lequel une première surface de la première couche semi-conductrice et un premier côté de la troisième couche semi-conductrice sont sensiblement coplanaires dans un premier plan (126), la première surface de la deuxième couche semi-conductrice étant au moins partiellement en retrait par rapport au premier plan.

6. Convertisseur de polarisation selon la revendication 3, 4 ou 5, dans lequel une deuxième surface de la première couche semi-conductrice, la deuxième surface de la deuxième couche semi-conductrice et une deuxième surface de la troisième couche semi-conductrice sont sensiblement coplanaires dans un second plan (128).

7. Convertisseur de polarisation selon l'une quelconque revendication précédente, dans lequel la première couche semi-conductrice est une couche de phosphure d'indium, la deuxième couche semi-conductrice est une couche de phosphure d'arséniure d'indium et de gallium, et la troisième couche semi-conductrice est une couche de phosphure d'indium.

8. Convertisseur de polarisation selon l'une quelconque revendication précédente, dans lequel la deuxième couche semi-conductrice est une couche centrale d'un guide d'ondes, la couche centrale ayant un indice de réfraction différent de celui de la première couche semi-conductrice et de la troisième couche semi-conductrice.

9. Circuit intégré photonique comprenant le convertisseur de polarisation selon l'une quelconque revendication précédente.

10. Procédé de fabrication d'un convertisseur de polarisation (100) pour un circuit intégré photonique, comprenant :
la formation d'une première couche semi-conductrice (130, 102) ;
la formation d'une couche de précurseur (132) permettant de former une deuxième couche semi-conductrice (104) sur la première couche semi-conductrice ;
la formation d'une troisième couche semi-conductrice (134, 106) sur la couche de précurseur ; et
après la formation de la troisième couche semi-conductrice sur la couche de précurseur, et pour former la deuxième couche semi-conductrice entre et en contact avec la première couche semi-conductrice et la troisième couche semi-conductrice, le retrait d'une première partie de la couche de précurseur d'une première face de la couche de précurseur, sans retirer une seconde partie de la couche de précurseur d'une seconde face de la couche de précurseur, pour former une première surface de la deuxième couche semi-conductrice de telle sorte que, lorsqu'elle est vue dans un plan de section transversale perpendiculaire à un axe de propagation de la lumière du convertisseur à polarisation, une première partie de la deuxième couche semi-conductrice est plus épaisse qu'une seconde partie de la deuxième couche semi-conductrice, **caractérisé en ce que** le retrait de la première partie de la couche de précurseur comprend la gravure de la première partie de la couche de précurseur sans gravure d'une partie de la troisième couche semi-conductrice chevauchant la première partie.

11. Procédé selon la revendication 10, la couche de précurseur comprenant un matériau cristallin, dans lequel le retrait de la première partie de la couche de précurseur comprend la gravure de la couche de précurseur à partir de la première face à l'aide d'un agent de gravure sélective pour un plan {111} du matériau cristallin, le plan {111} correspondant à un angle souhaité pour le premier côté de la deuxième couche semi-conductrice.

12. Procédé selon la revendication 10 ou 11, comprenant la gravure de la couche de précurseur à partir de la première face jusqu'à ce que la première surface de la deuxième couche semi-conductrice soit obtenue avec une planéité souhaitée.

13. Procédé selon l'une quelconque des revendications 10 à 12, comprenant :
la formation d'une couche protectrice sur la seconde partie de la couche de précurseur, pour protéger contre le retrait de la seconde partie de la couche de précurseur pendant le retrait de la première partie de la couche de précurseur ; et
le retrait de la couche protectrice après le retrait de la première partie de la couche de précurseur.

14. Procédé selon l'une quelconque des revendications 10 à 13, comprenant le retrait de la troisième couche semi-conductrice après la formation de la deuxième couche semi-conductrice.

15. Procédé selon l'une quelconque des revendications 10 à 14, comprenant :
la gravure pour former une première surface de la première couche semi-conductrice, une première surface de la couche de précurseur et une première surface de la troisième couche semi-conductrice sensiblement coplanaires l'une par rapport à l'autre ; et
la gravure pour former une deuxième surface de la première couche semi-conductrice, une deuxième surface de la couche de précurseur et une deuxième surface de la troisième couche semi-conductrice sensiblement coplanaires l'une par rapport à l'autre, dans lequel la deuxième surface de la couche de précurseur est la deuxième surface de la deuxième couche semi-conductrice.
